# EUROPEAN PATENT APPLICATION

(11) **EP 3 246 643 A1**
(43) Date of publication of application: **22.11.2017**
(21) Application number: 17275069.7
(22) Date of filing: 16.05.2017
(51) Int. Cl.: F25D 29/00, B60H 1/32, F25B 49/02

(54) **REFRIGERATION UNIT POWER SOURCE CONTROL SYSTEM AND METHOD**

(30) Priority: 16.05.2016 GB 201608619
(71) Applicant: G.A.H. (Refrigeration) Limited, Ipswich, Suffolk IP3 9SJ (GB)
(72) Inventor: Reader, John, Ipswich Suffolk IP3 9SJ (GB)
(74) Representative: Williams Powell

(57) **Abstract**

A refrigeration unit power source control system and method are described. The refrigeration unit power source control system (10) interfaces to a controller (20) of a power source (30) for a refrigeration unit (40). It is arranged to monitor operation of the refrigeration unit (40) and disable, via the controller (20), one or more economy modes of the power source (30) when it is determined that the refrigeration unit (40) is in demand of cooling.

## Description

### Field of the Invention

The present invention relates to a refrigeration unit power source control system and method that is particularly applicable for use in refrigerated vehicles.

### Background to the Invention

Vehicles may have a refrigeration unit installed or added which is powered from the vehicles' motor, either directly (mechanically through the use of belts, pulleys, shafts or similar) or indirectly (by drawing electrical power from the vehicles' battery or alternator).

Refrigeration units and their controllers are designed with the expectation that they will be able to operate substantially continuously in order to achieve and then maintain a predetermined environment. For example, a typical controller would seek to minimise over time the difference (error) between the measured temperature and a desired temperature. Such a process typically involves an initial pulldown period in which the environment temperature is reduced to the set point temperature and once achieved the refrigeration unit is cycled on and off as required to maintain this environment temperature within desired limits. Such cycles will vary. They may reduce over time as residual heat is removed from the vehicle bodywork so creating less demand on the refrigeration but equally they can increase as door openings to make product deliveries will increase the demands on the system.

Irrespective of the type of refrigeration unit or control algorithm, one common requirement for optimal operation is time - it cannot be expected to operate optimally the instant it is turned on.

Generally, this requirement is not an issue in refrigerated vehicles. Refrigeration units and the storage compartment(s) they cool can be designed with the payload in mind. It may have to be accepted that a vehicle must be pre-chilled or run for some time before goods are loaded if the initial environment is critical but once running, a properly designed refrigeration system would typically be able to maintain the desired environment.

However, recent developments in vehicle engine control have undermined this position.

More and more vehicles are including so-called "Stop/Start technology" technology as standard. This technology is typically included as part of a vehicle's engine management routines to improve the fuel economy of the vehicle. A vehicle with such technology temporarily stops its engine when it detects that the vehicle has stopped (for example in traffic) and automatically re-starts the engine under predetermined circumstances (such as pressing of the accelerator or clutch pedal, battery dropping below a predetermined voltage etc). Vehicle manufacturers are relying on economy functions such as this in order to minimise vehicle emissions.

However, in the case of vehicles with refrigerated compartments or units, this is an issue. When the engine is temporarily stopped, power to the refrigeration unit is lost because the direct drive is no longer available (and in the case of indirect driven units, the available voltage to the overall vehicle drops and may be insufficient to run the refrigeration unit).

### Statement of Invention

According to an aspect of the present invention, there is provided a refrigeration unit power source control system arranged to interface to a controller of a power source for the refrigeration unit, the refrigeration unit power source control system being arranged to monitor operation of the refrigeration unit and disable via the controller one or more economy modes of the power source when it is determined that the refrigeration unit is in demand of cooling.

When a fridge is on, it will cycle on for a period to cool and then cycle off when at temperature for a further period. In embodiments of the present invention, a vehicle's economy mode such as the start/stop engine management routine is disabled while cooling is needed from the fridge but enabled at other times. In this way, the engine management can operate as normal when the refrigeration unit is at or around the desired temperature. However, when cooling is needed, the refrigeration unit power source control system acts to ensure that the power source is not subject to interference from economy operation modes. In this way, it is possible to get cooling when it is needed but also allow the vehicle engine management to Stop/Start when possible so as to give the best fuel and emissions advantage.

The refrigeration unit power source control system may be a separate component or may be part of the controller of the refrigeration unit or of a vehicle (such as part of the vehicle's engine management system). The refrigeration unit power source control system may interface with a vehicle's management bus such as the CAN bus.

Preferably, fridges are arranged to output a signal just prior to coming in to demand and this is monitored by the refrigeration unit power source control system to disable Stop/Start. Preferably, the removal of the signal is used as a trigger to cause or request re-enablement of the Stop/Start function.

### Brief Description of the Drawings

An embodiment of the present invention will now be described by way of example only with reference to the accompanying drawings in which:
Figure 1 is a schematic diagram illustrating a refrigeration unit power source control system according to an embodiment of the present invention; and,
Figure 2 is a diagram illustrating interaction of an embodiment of the present invention with a vehicle's engine management system.

### Detailed Description

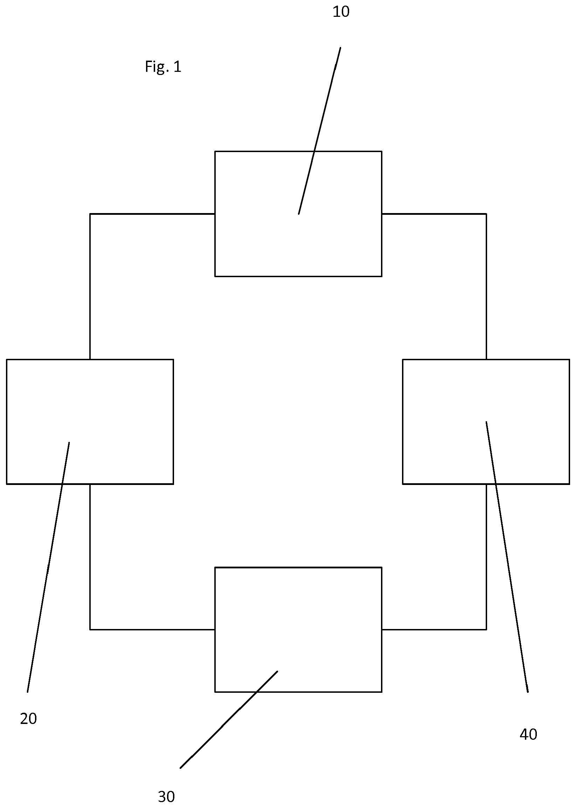

Figure 1 is a schematic diagram illustrating a refrigeration unit power source control system 10 according to an embodiment of the present invention. The refrigeration unit power source control system 10 is arranged to interface to a controller 20 of a power source 30 for the refrigeration unit 40.

The refrigeration unit power source control system 10 is arranged to monitor operation of the refrigeration unit 40 and disable via the controller 20 one or more economy modes of the power source 30 when it is determined that the refrigeration unit 40 is in demand of cooling.

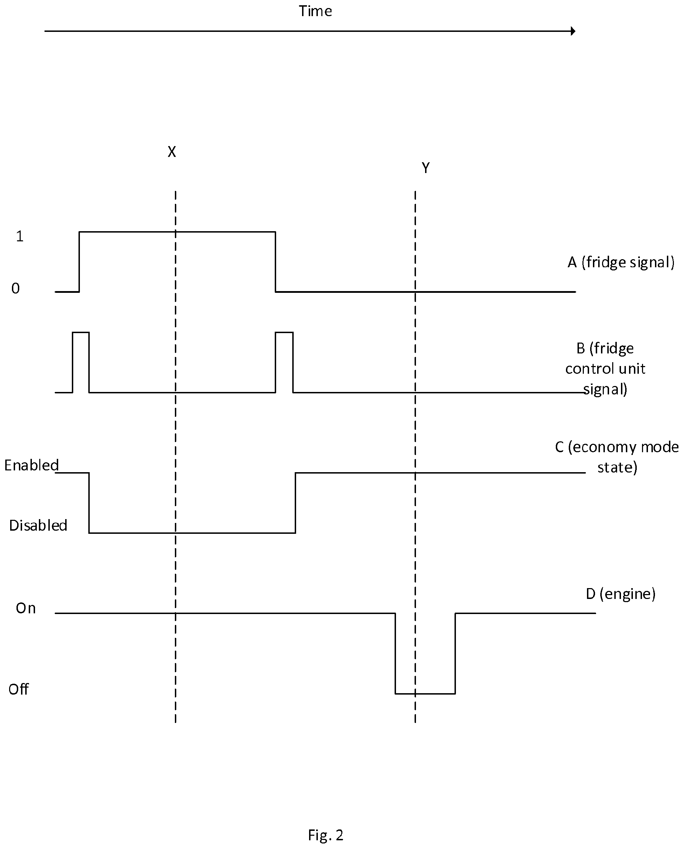

Figure 2 is a diagram illustrating interaction of an embodiment of the present invention with a vehicle's engine management system.

Line 'A' shows a signal from the refrigeration unit 40. When the signal is high (1), this indicates that there is demand for cooling (for example, a temperature sensor may have triggered operation as the temperature of an environment maintained by the refrigeration unit 40 may have risen above a predetermined set point).

The refrigeration unit power source control system 10 detects the high signal and applies a disable signal via line 'B' to the controller 20 resulting in the economy mode(s) being turned off as shown in line 'C'. When the vehicle reaches a point X where the controller would normally turn off the engine (for example when waiting at a red traffic light), this operation is overridden as shown in line 'D' (which shows engine state).

When the signal of line A drops low (0), there is no demand for cooling and the refrigeration unit 40 is dormant. The refrigeration unit control system 10 detects the low signal and applies an enable signal via line 'B' to the controller 20 resulting in the economy mode(s) being turned on as shown in line 'C'. When the vehicle reaches a point Y where the controller would normally turn off the engine, it is able to turn it off as normal.

## Claims

1. A refrigeration unit power source control system for interfacing to a controller of a power source for the refrigeration unit, the refrigeration unit power source control system being arranged to monitor operation of the refrigeration unit and disable, via the controller, one or more economy modes of the power source when it is determined that the refrigeration unit is in demand of cooling.

2. The system of claim 1, wherein the power source comprises an engine of a vehicle.

3. The system of claim 2, wherein the system is separate to a controller of the refrigeration unit.

4. The system of claim 3, wherein the system is arranged to communicate with the controller of the refrigeration unit to determine when the refrigeration unit is in demand of cooling.

5. The system of claim 2, 3 or 4, further comprising an interface for connection to the vehicle's management bus, the system being arranged to communicate with the controller via the management bus.

6. The system of claim 2, wherein the system is part of a controller of the refrigeration unit.

7. The system of claim 2, 3, 4, 5 or 6, wherein the system is part of the vehicle's engine management system.

8. The system of any preceding claim, wherein the refrigeration unit is arranged to output a signal prior to coming in to demand, the system being arranged to monitor for said signal and the to disable said economy modes.

9. The system of claim 8, wherein the system is arranged to monitor for removal of the signal by the refrigeration unit and upon detecting removal to cause re-enablement of said economy modes.

10. A vehicle comprising a refrigeration unit, a power source and the system of any preceding claim.

11. A method for controlling a refrigeration unit power source comprising:
interfacing to a controller of a power source for the refrigeration unit;
monitoring operation of the refrigeration unit; and,
disabling, via the controller, one or more economy modes of the power source when it is determined that the refrigeration unit is in demand of cooling.
